# EUROPEAN PATENT APPLICATION

(11) **EP 4 123 334 A1**
(43) Date of publication of application: **25.01.2023**
(21) Application number: 22186456.4
(22) Date of filing: 22.07.2022
(51) Int. Cl.: G01S 7/03, G01S 7/35, G01S 13/931, H04N 21/845, H04N 19/00, H04N 21/00, G01S 7/00, G01S 13/34

(54) **ENHANCED MMIC WITH H264/H265 ENCODING FOR EFFICIENT ADAS RADAR**

(30) Priority: 22.07.2021 US 202163224509 P; 21.07.2022 US 202217869825
(71) Applicant: Aptiv Technologies Limited, St. Michael, 14004 (BB)
(72) Inventor: Gianelli, Christopher D., Michigan City, 46360 (US); Robert, Krutsch, 40237 Düsseldorf (DE)
(74) Representative: Manitz Finsterwald Patent- und Rechtsanwaltspartnerschaft mbB

(57) **Abstract**

Automotive radar systems and methods include a radar monolithic microwave integrated circuit (MMIC) configured to perform radar processor functionality including performing range fast Fourier transforms (FFTs) on a plurality of received radar signal streams to obtain a plurality of transformed radar signal streams, performing H264/H265 encoding on I-frames of the plurality of transformed radar signal streams to obtain a plurality of compressed radar signal streams, and outputting, via a network interface, the plurality of compressed radar signal streams, and a domain controller connected to the radar MMIC via the network interface and configured to receive and utilize the plurality of compressed radar signal streams for an advanced driver-assistance system (ADAS) or autonomous vehicle driving feature, wherein the automotive radar systems/method do not include or utilize a distinct or standalone radar processor.

## Description

### CROSS-REFERENCE TO RELATED APPLICATION(S)

The present application claims the benefit of United States Provisional Application Number 63/224,509, filed on July 22, 2021. The disclosure of the above-identified application is incorporated herein by reference in its entirety.

### FIELD

The present disclosure generally relates to automotive radar systems and, more particularly, an enhanced monolithic microwave integrated circuit (MMIC) with H264/H265 encoding for efficient advanced driver-assistance system (ADAS) and autonomous driving radar.

### BACKGROUND

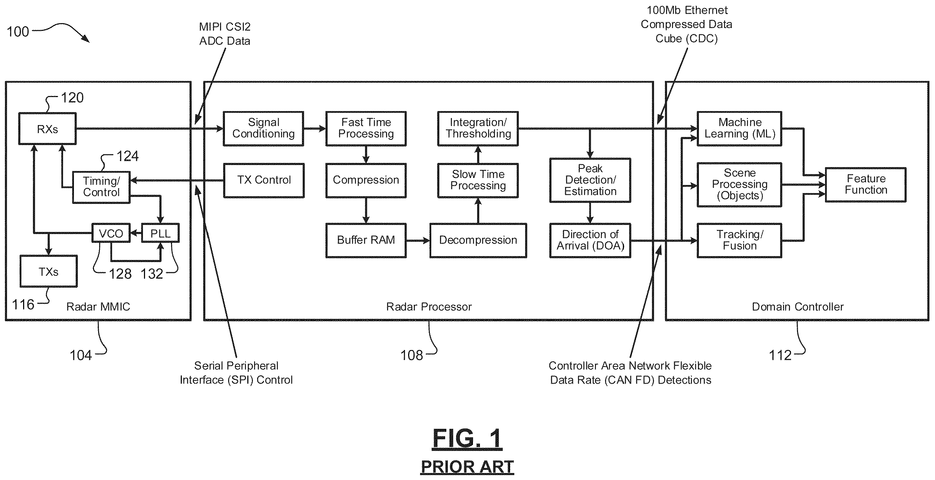

Automotive radar systems are often utilized as part of advanced driver-assistance systems (ADAS) and autonomous driving functionality. FIG. 1 illustrates a functional block diagram of a conventional automotive radar system operating in a standalone fashion, which is typically equipped with a monolithic microwave integrated circuit (MMIC) that serves as the radio frequency (RF) transmitter and receiver. These conventional automotive radar systems suffer from limited processing functionality within the MMIC, leading to high data rates requiring more processing power at a sink device, a lack of widely known or vendor-implemented custom or unique data compression approaches, and data compression approaches that require bit level manipulations for encoding/decoding. Thus, while these conventional automotive radar systems do work for their intended purpose, there exists an opportunity for improvement in the relevant art.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

According to one aspect of the present disclosure, an automotive radar system is presented. In one exemplary implementation, the automotive radar system comprises a radar monolithic microwave integrated circuit (MMIC) configured to perform radar processor functionality including obtaining a plurality of received radar signal streams, performing range fast Fourier transforms (FFTs) on the plurality of received radar signal streams to obtain a plurality of transformed radar signal streams, performing H264/H265 encoding on I-frames of the plurality of transformed radar signal streams to obtain a plurality of compressed radar signal streams, and outputting, via a network interface, the plurality of compressed radar signal streams, and a domain controller connected to the radar MMIC via the network interface and configured to receive and utilize the plurality of compressed radar signal streams for an advanced driver-assistance system (ADAS) or autonomous vehicle driving feature, wherein the automotive radar system does not include a distinct or standalone radar processor.

In some implementations, the radar MMIC is configured to transmit a plurality of transmitted radar signal streams and capture the plurality of received radar signal streams via a set of transmitter/receiver devices. In some implementations, the radar processor functionality further comprises temporarily storing each of the plurality of received radar signal streams, the plurality of transformed radar signal streams, and the plurality of compressed radar signal streams in a static random-access memory (SRAM). In some implementations, the radar processor functionality further comprises conditioning the plurality of received radar signal streams to obtain a plurality of conditioned radar signal streams, performing the range FFTs on the plurality of conditioned radar signal streams to obtain the plurality of transformed radar signal streams, and temporarily storing the plurality of conditioned radar signal streams in the SRAM.

In some implementations, the network interface is a lower-rate conventional Ethernet or conventional controller area network (CAN). In some implementations, the network interface is not a higher-rate CAN flexible data rate (FD) network. In some implementations, the H264/265 encoding includes H264 Advanced Video Coding (AVC), H265 High-Efficiency Video Coding (HEVC), or a combination thereof. In some implementations, H264 AVC comprises initializing multiple processes in order to create an H264 bitstream and the utilizing a block-oriented standard with motion competition to process frames of video content and generate macroblocks of block sizes as large as 16×16 pixels that are further divided into transform and prediction blocks, and H265 HEVC comprises dividing an H265 bitstream into coding tree units (CTUs) of different sizes up to 64×64 pixels, where pixel block sizes typically increase coding efficiency, to achieve approximately 25-50% better data compression at a same video quality compared to H264 AVC and supporting resolutions up to 8192×4320 pixels, including 8K ultra high-definition (UHD). In some implementations, the absence of the radar processor and the implementation of the radar processor functionality into the radar MMIC along with industry-standard H264/H265 encoding provides for reduced costs of the automotive radar system.

According to another aspect of the present disclosure, an automotive radar method is presented. In one exemplary implementation, the automotive radar method comprises providing a radar monolithic MMIC configured to perform radar processor functionality including obtaining a plurality of received radar signal streams, performing range FFTs on the plurality of received radar signal streams to obtain a plurality of transformed radar signal streams, performing H264/H265 encoding on I-frames of the plurality of transformed radar signal streams to obtain a plurality of compressed radar signal streams, and outputting, via a network interface, the plurality of compressed radar signal streams, and providing a domain controller connected to the radar MMIC via the network interface and configured to receive and utilize the plurality of compressed radar signal streams for an advanced driver-assistance system (ADAS) or autonomous vehicle driving feature, wherein the automotive radar method does not utilize a distinct or standalone radar processor.

In some implementations, the radar MMIC is configured to transmit a plurality of transmitted radar signal streams and capture the plurality of received radar signal streams via a set of transmitter/receiver devices. In some implementations, the radar processor functionality further comprises temporarily storing each of the plurality of received radar signal streams, the plurality of transformed radar signal streams, and the plurality of compressed radar signal streams in a SRAM. In some implementations, the radar processor functionality further comprises conditioning the plurality of received radar signal streams to obtain a plurality of conditioned radar signal streams, performing the range FFTs on the plurality of conditioned radar signal streams to obtain the plurality of transformed radar signal streams, and temporarily storing the plurality of conditioned radar signal streams in the SRAM.

In some implementations, the network interface is a lower-rate conventional Ethernet or conventional CAN. In some implementations, the network interface is not a higher-rate CAN FD network. In some implementations, the H264/265 encoding includes H264 AVC, H265 HEVC, or a combination thereof. In some implementations, H264 AVC comprises initializing multiple processes in order to create an H264 bitstream and the utilizing a block-oriented standard with motion competition to process frames of video content and generate macroblocks of block sizes as large as 16×16 pixels that are further divided into transform and prediction blocks, and H265 HEVC comprises dividing an H265 bitstream into CTUs of different sizes up to 64×64 pixels, where pixel block sizes typically increase coding efficiency, to achieve approximately 25-50% better data compression at a same video quality compared to H264 AVC and supporting resolutions up to 8192x4320 pixels, including 8K ultra high-definition UHD. In some implementations, the absence of the radar processor and the implementation of the radar processor functionality into the radar MMIC along with industry-standard H264/H265 encoding provides for reduced costs of the automotive radar system.

According to yet another aspect of the present disclosure, an automotive radar system is presented. In one exemplary implementation, the automotive radar system comprises a radar MMIC means for transmitting a plurality of transmitted radar signal streams and capturing the plurality of received radar signal streams via a set of transmitter/receiver devices means and providing radar processor functionality including obtaining a plurality of received radar signal streams, performing range FFTs on the plurality of received radar signal streams to obtain a plurality of transformed radar signal streams, performing H264/H265 encoding on I-frames of the plurality of transformed radar signal streams to obtain a plurality of compressed radar signal streams, and outputting, via a network interface means, the plurality of compressed radar signal streams, and a domain controller means connected to the radar MMIC means via the network interface means and for receiving and utilizing the plurality of compressed radar signal streams for an advanced driver-assistance system (ADAS) or autonomous vehicle driving feature means, wherein the automotive radar system does not include a distinct or standalone radar processor means.

In some implementations, the radar processor functionality further comprises conditioning the plurality of received radar signal streams to obtain a plurality of conditioned radar signal streams, performing the range FFTs on the plurality of conditioned radar signal streams to obtain the plurality of transformed radar signal streams, and temporarily storing each of the plurality of received radar signal streams, the plurality of conditioned radar signal streams, the plurality of transformed radar signal streams, and the plurality of compressed radar signal streams in a SRAM, and the network interface is a lower-rate conventional Ethernet or conventional CAN and not a higher-rate CAN FD network.

Further areas of applicability of the teachings of the present application will become apparent from the detailed description, claims and the drawings provided hereinafter, wherein like reference numerals refer to like features throughout the several views of the drawings. It should be understood that the detailed description, including disclosed embodiments and drawings referenced therein, are merely exemplary in nature intended for purposes of illustration only and are not intended to limit the scope of the present disclosure, its application or uses. Thus, variations that do not depart from the gist of the present application are intended to be within the scope of the present application.

### BRIEF DESCRIPTION OF THE DRAWING(S)

The present disclosure will become more fully understood from the detailed description and the accompanying drawings, wherein:
FIG. 1 is a functional block diagram of a conventional automotive radar system according to the prior art;
FIG. 2 is a functional block diagram of a data flow/processing split of an example automotive radar system according to some implementations of the present disclosure;
FIG. 3 is a functional block diagram of a data flow/processing split of another example automotive radar system according to some implementations of the present disclosure;
FIG. 4 is a functional block diagram of a data flow/processing split of yet another example automotive radar system according to some implementations of the present disclosure; and
FIG. 5 is a functional block diagram of a memory access/processing flow for the example automotive radar system of FIG. 4 according to some implementations of the present disclosure.

### DETAILED DESCRIPTION

The general trend in automotive radar system design has been one of increasing integration. By reducing the number of discrete components and integrating more functionality into building blocks prices have decreased and performance has improved. As initially discussed, a conventional automotive radar system 100 as shown in FIG. 1 could have three discrete components performing important functions - the monolithic microwave integrated circuit (MMIC) 104, a radar processor 108, and the domain controller 108. In this configuration, the MMIC 104 serves as the radio frequency (RF) transmitter and the microcontroller 108 controls the operation of the MMIC and processes the data recorded by the MMIC. A MMIC contains 104 a plurality of transmit and receive ports 116, 120, respectively, timing and control logic 124, as well as voltage-controlled oscillator (VCO) 128 and phase locked loop (PLL) 132. The radar processor 108 performs a series of signal processing functions on the data from the MMIC 104 and controls the operation of the MMIC 104, and the domain controller 112 performs tracking functions and implements feature functions. While example sub-components of the radar processor 108 and the domain controller 112 are illustrated for thoroughness (e.g., Mobile Industry Processor Interface (MIPI) Camera Serial Interface 2.0 (CSI2) analog-digital converter (ADC) data), it will be appreciated that these components could have alternate configurations/sub-components.

It may be possible to remove the radar processor 108 discrete component and implement its functionality in the domain controller 112. However, in this architecture the data rate from the MMIC 104 would be quite high. This is because one important function performed by the radar processor 108 is compression. This refers to a data compression operation applied to the radar data after the "fast-time" or "range domain" processing has been completed. This data compression is a common step in radar processing, as data from many pulses representing a full coherent processing interval (CPI) need to be stored in memory. Once the entire CPI has been collected, then processing can resume in the "slow-time" or "Doppler domain". The data compression step reduces the total memory required in the radar processor 108. In fact, the radar data after fast-time processing typically occupies a significant proportion of the total radar processor memory space.

There are several important metrics related to the data compression and decompression approaches including: (i) the compression ratio, (ii) the signal quality after compression and decompression, and (iii) the efficiency with which the compression/decompression may be implemented. The compression ratio represents the ratio of the size of the data after the compression operation to the size of the data before the compression ratio. The higher the compression ratio the more memory may be saved or obviated from the design. Furthermore, when considering transmitting the data after the compression block, a larger compression ratio implies a lower data rate. There are many ways to measure signal quality, but most of these metrics represent how much the compressed and decompressed signal differs from the original input signal. In order to make useful measurements with the system 100, the signal cannot be overly degraded. Finally, it is important that the compression/decompression computations are efficiently implemented, so that the compression/decompression process does not represent significant additional processing/computation load.

One common approach to data compression is to perform a block floating point conversion, where some group of post fast-time processed (or post-range fast Fourier transform, or FFT) data are converted from fixed width integers to a floating point number, and the exponent is shared across the data points which are compressed together. This approach can be used achieve respectable compression ratios while maintaining acceptable signal quality. In another oft-taken approach, blocks of data from different ranges are encoded using exponential Golomb (EG) compression. Similar to the previously mentioned block floating point conversion, this approach allows for a reasonable reduction in the data rate while note overly degrading the signal. There are a few concerns when considering the above listed approaches for use in a system design concept where the data after the range FFT are compressed and transmitted to a separate device, such as a domain controller, for follow-on processing.

First, there is not a widely accepted standard for the implementation of these data compression approaches. This means that special, new compression functionality would have to be created both in the source device (the MMIC 104 in this case) and the sink device (the domain controller 112 in this case). The second concern is that these approaches typically result in compressed data that need to be manipulated at the bit level in order to perform decompression/decoding. While this may be acceptable in a basic three-component arrangement as previously described herein and shown in FIG. 1, it represents a challenge when the data will be sent to a separate device for follow-on processing. In summary, these conventional approaches suffer from (i) limited processing functionality within the MMIC 104, leading to high data rates requiring more processing power at the sink device, (ii) a lack of widely known or vendor-implemented custom or unique data compression approaches, and (iii) data compression approaches that require bit level manipulations for encoding/decoding.

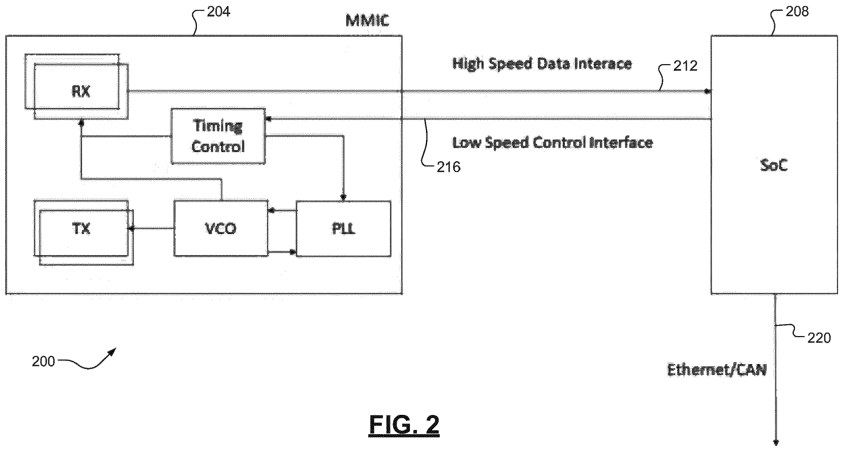

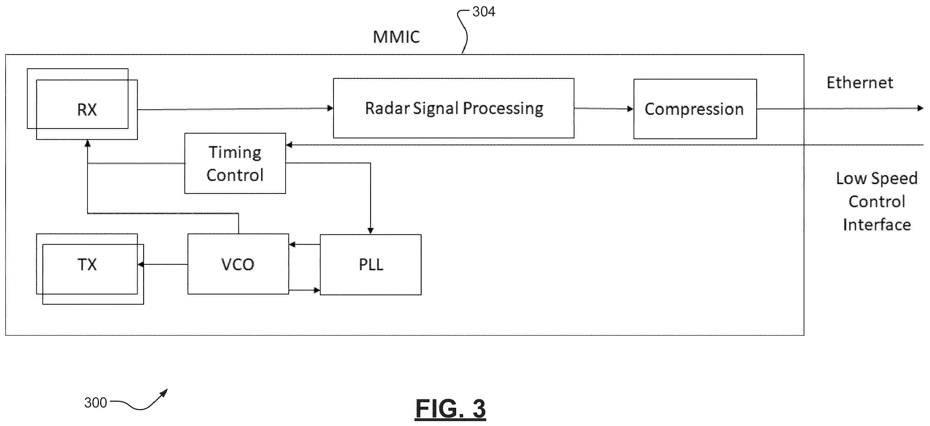

Accordingly, improved automotive radar systems and methods are presented herein. Referring now to FIG. 2, in one example embodiment of an automotive radar system 200, an MMIC 204 is connected to a domain controller 208 via a high-speed interface 212 used to communicate the collected data and a low-speed interface 216 used for control and synchronization purposes. The high-speed interface could be, for instance, a MIPI CSI-2 interface as found today in most commercially available MMICs. This approach has the disadvantage of increased system cost as the domain controller 208 being an additional system-on-chip (SoC) that has to be present to process the data stream before going out on a less expensive interface 220, such as Ethernet or traditional CAN (e.g., not a high-performance network, such as CAN FD). Referring now to FIG. 3, in another example embodiment of an example automotive radar system 300, parts of the radar signal processing could be integrated into the MMIC 304 and compress the output data such that sending over CAN or Ethernet becomes possible. A careful assessment has to be made of how much functionality can be integrated in the MMIC 304 as the technology of the MMIC 304 and the operational conditions are more challenging there compared to the SoC domain controller (not shown in FIG. 3; 208 of FIG. 2). The disadvantage of the approach here can come from pulling in too much signal processing inside the MMIC 304 or by using a custom compression that needs then to be understood by the domain controller/SoC (not shown in FIG. 3; 208 of FIG. 2). The domain controller or SoC (not shown in FIG. 3; 208 of FIG. 2), where the data is used, will have to spend compute resources to unpack and decode the stream. These are typically central processing unit (CPU) resources that are extremely precious in advanced driver assistance system (ADAS) and autonomous driving applications.

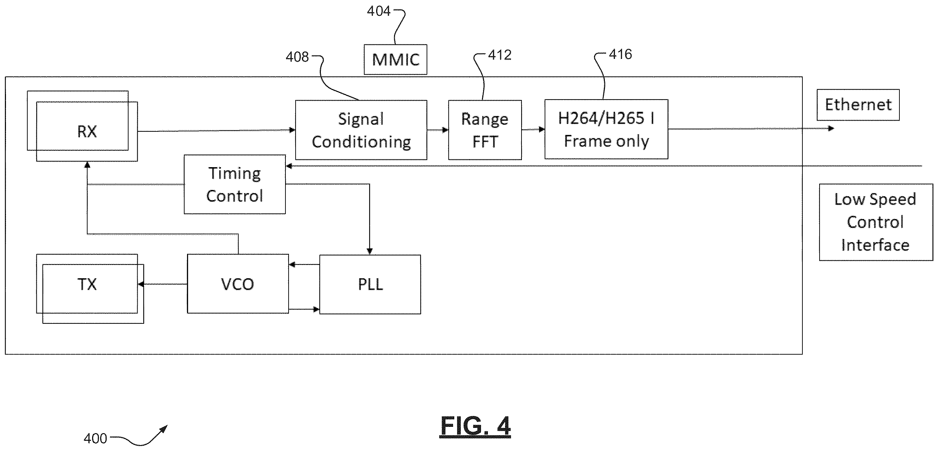

In yet another embodiment as shown in FIG. 4, a pipeline for an radar automotive system 400 is proposed that solves some of the following limitations of the two embodiments described above and shown in FIGS. 2-3: (i) introducing a reduced amount of radar signal processing on the MMIC 404; (ii) allowing a CSI raw data processing of the radar data; (iii) reducing the amount of data transferred allowing for low speed interfaces, and (iv) using a compression scheme that is widely used in image space and broadly adopted by SoC suppliers. First, the RX signal can be optionally enhanced or conditioned at block 408, and thereafter the range FFT is computed on every RX stream at block 412. After, an H264 or H265 encoder 416 configured to process only I Frames (a detail related to the H264/H265 encoding approach) is used to compress the data stream. The term "I-frame" refers to a video compression technique that divides frames into macroblocks and then looks for redundancies between blocks. This process works through using Intra-frames or I-frames (also known a keyframes and delta frames), which only store changes in the image to reduce redundant information. This approach solves the problems with the prior art by incorporating sufficient functionality into the MMIC 404 to reduce the data rate by an acceptable degree, and uses well-known data compression methods that can be efficiently applied both at the MMIC 404 and domain controller (not shown in FIGS. 3-4; 208 of FIG. 2).

The term "H264/H265 encoding" as used herein refers to the use of H64 encoding, H265 encoding, or some hybrid combination thereof. These two video compression technologies will now be discussed in greater detail to provide sufficient background details. H264, also known as Advanced Video Coding (AVC) or MPEG-4 Part 10, is an industry standard codec for video compression that made it possible for publishers and content creators to record, compress, and distribute their online videos, especially streams. Rather, the intention of H264 AVC was to develop a standard capable of delivering good video quality at lower bitrates compared to previous standards. The H264 AVC generally operates by initializing multiple processes in order to create an H264 bitstream. It then utilizes a block-oriented standard with motion competition so that it can process frames of video content. The results are macroblocks which consist of block sizes as large as 16×16 pixels. These can be further divided into transform and prediction blocks. Then, the video decoder comes into play to prepare the file for viewing.

H265, also referred to as High-Efficiency Video Coding (HEVC), is a less-popular successor to H264. It consists of some considerable improvements when compared to H264 AVC. Moreover, H265 is a video compression standard that was designed for the newest generation of high-definition (HD) video. Compared to H264, this newer standard offers from 25% to 50% better data compression at the same level of video quality. In other words, it basically delivers high-quality videos at the same bitrate. Additionally, H265 HEVC supports resolutions up to 8192×4320, which includes 8K ultra-HD (UHD) as well. While H264 would break an image down into squares of pixels known as macroblocks, H265 relies on a different encoding method. Namely, this codec replaces macroblocks with something called coding tree units (CTUs). CTUs can use block structures up to 64×64 pixels. HEVC first divides the picture into different CTU sizes, and the biggest pixel block size typically increases the coding efficiency. Thus, while H265 encoding is overall better performing, H264 is still more than adequate for particular applications and is also more widely-accepted as an industry standard.

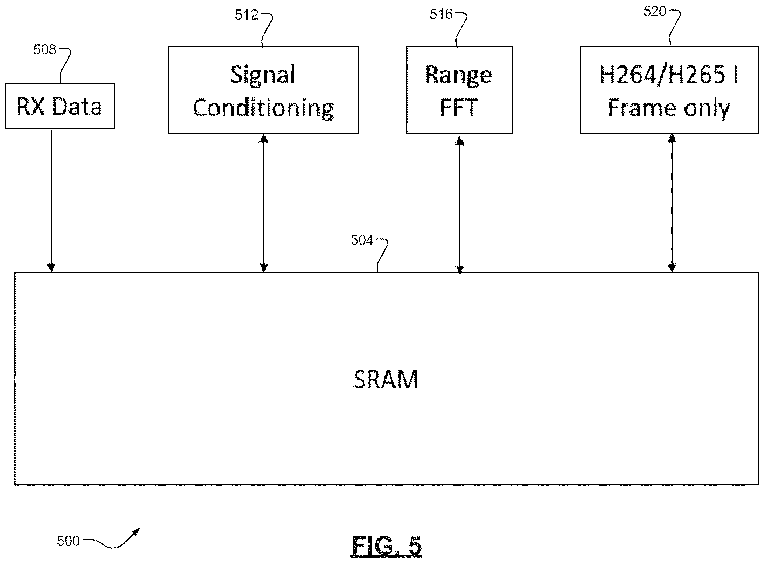

Referring now to FIG. 5, the above-described signal conditioning, range FFT, and H264/H265 encoding (408-416 of FIG. 4) is illustrated in greater detail and is generally referenced as 500. RX data 508 initially is buffered in a static random-access memory (SRAM) 504 as a circular buffer, arranged in chunks that can be processed easily by a range FFT 516 (typically sizes are 512 and 1024 samples). The signal can be conditioned or not at 512 dependent on the approach. Once the signal is conditioned, the signal conditioning engine 512 stores the results in SRAM 504 and triggers the range FFT 516. The range FFT 516 takes the data from SRAM 504 and performs the range FFT. The output is stored in SRAM 504. The output buffer is split into real and imaginary buffers from multiple antennas and consecutive frames. This image like arrangement allows for application of the H264/H265 encoding 520. The range FFT engine 516 triggers the H264/H265 engine 520 after it has finished processing a chunk of data. After sufficient amount of data is buffered (typically encoders would work with block sizes of 8 or 16) the H264/H265 codec would start compressing the data. As the data product being manipulated is radar data, concepts like temporal multi-frame compression do not apply. Thus, we are constraining the compression only to I-Frames and only using the intra option. It is also important to note that we are compressing the data on the fly and not storing the entire frame in SRAM 504, minimizing so the overall system cost.

Example cost advantages for a corner radar configuration of an automotive radar system could be as follows: (i) three-way RX system with 20 million (M) samples input at 12 bits/sample can generate after the range FFT a bandwidth of 180 megabits per second (Mb/s); (ii) given a compression of 2.5x (2.5 times) that we have seen achievable we could decrease the bandwidth to 72 Mb/s; (iii) in this case, a cost advantage of about $1-2 US dollars could be realized by switching from 1 gigabit (Gb) to 100 Mb Ethernet, and (iv) on the domain controller, when four corner radars are integrated, bandwidth could be decreased under 1 Gb allowing for a less expensive switch. Generally, we could decrease the overall build-of-materials (BOM) by a double-digit number (a similar amount as one sensor would cost). The above-described data savings are merely exemplary and it will be generally appreciated that improved compression (less throughput) and/or fewer and/or less expensive componentry will overall substantially decrease automotive radar system costs and complexity without having a negative impact on performance thereby maintaining safety standards.

In addition, while not separately illustrated (e.g., as a flowchart), it will be appreciated that a radar processing method based on the above-description is envisioned and fully supported herein. Such a method, for example, could comprise the following steps: providing a radar MMIC configured to perform radar processor functionality including obtaining a plurality of received radar signal streams, optionally conditioning the plurality of received radar signal streams to obtain a plurality of conditioned radar signal streams, performing range FFTs on the plurality of conditioned/received radar signal streams to obtain a plurality of transformed radar signal streams, performing H264/H265 encoding on I-frames of the plurality of transformed radar signal streams to obtain a plurality of compressed radar signal streams, and outputting, via a network interface, the plurality of compressed radar signal streams, and providing a domain controller connected to the radar MMIC via the network interface and configured to receive and utilize the plurality of compressed radar signal streams for an advanced driver-assistance system (ADAS) or autonomous vehicle driving feature, wherein the automotive radar method does not utilize a distinct or standalone radar processor.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known procedures, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The term "and/or" includes any and all combinations of one or more of the associated listed items. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

As used herein, the term module may refer to, be part of, or include: an Application Specific Integrated Circuit (ASIC); an electronic circuit; a combinational logic circuit; a field programmable gate array (FPGA); a processor or a distributed network of processors (shared, dedicated, or grouped) and storage in networked clusters or datacenters that executes code or a process; other suitable components that provide the described functionality; or a combination of some or all of the above, such as in a system-on-chip. The term module may also include memory (shared, dedicated, or grouped) that stores code executed by the one or more processors.

The term code, as used above, may include software, firmware, byte-code and/or microcode, and may refer to programs, routines, functions, classes, and/or objects. The term shared, as used above, means that some or all code from multiple modules may be executed using a single (shared) processor. In addition, some or all code from multiple modules may be stored by a single (shared) memory. The term group, as used above, means that some or all code from a single module may be executed using a group of processors. In addition, some or all code from a single module may be stored using a group of memories.

The techniques described herein may be implemented by one or more computer programs executed by one or more processors. The computer programs include processor-executable instructions that are stored on a non-transitory tangible computer readable medium. The computer programs may also include stored data. Nonlimiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a general-purpose computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various general-purpose systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein, and any references to specific languages are provided for disclosure of enablement and best mode of the present invention.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. An automotive radar system, comprising:
a radar monolithic microwave integrated circuit (MMIC) configured to perform radar processor functionality including:
obtaining a plurality of received radar signal streams;
performing range fast Fourier transforms (FFTs) on the plurality of received radar signal streams to obtain a plurality of transformed radar signal streams;
performing H264/H265 encoding on I-frames of the plurality of transformed radar signal streams to obtain a plurality of compressed radar signal streams; and
outputting, via a network interface, the plurality of compressed radar signal streams; and
a domain controller connected to the radar MMIC via the network interface and configured to receive and utilize the plurality of compressed radar signal streams for an advanced driver-assistance system (ADAS) or autonomous vehicle driving feature,
wherein the automotive radar system does not include a distinct or standalone radar processor.

2. The automotive radar system of claim 1, wherein the radar MMIC is configured to transmit a plurality of transmitted radar signal streams and capture the plurality of received radar signal streams via a set of transmitter/receiver devices.

3. The automotive radar system of claim 2, wherein the radar processor functionality further comprises temporarily storing each of the plurality of received radar signal streams, the plurality of transformed radar signal streams, and the plurality of compressed radar signal streams in a static random-access memory (SRAM).

4. The automotive radar system of claim 3, wherein the radar processor functionality further comprises:
conditioning the plurality of received radar signal streams to obtain a plurality of conditioned radar signal streams;
performing the range FFTs on the plurality of conditioned radar signal streams to obtain the plurality of transformed radar signal streams; and
temporarily storing the plurality of conditioned radar signal streams in the SRAM.

5. The automotive radar system of claim 3, wherein the network interface is a lower-rate conventional Ethernet or conventional controller area network (CAN).

6. The automotive radar system of claim 5, wherein the network interface is not a higher-rate CAN flexible data rate (FD) network.

7. The automotive radar system of claim 1, wherein the H264/265 encoding includes H264 Advanced Video Coding (AVC), H265 High-Efficiency Video Coding (HEVC), or a combination thereof.

8. The automotive radar system of claim 7, wherein:
H264 AVC comprises initializing multiple processes in order to create an H264 bitstream and the utilizing a block-oriented standard with motion competition to process frames of video content and generate macroblocks of block sizes as large as 16×16 pixels that are further divided into transform and prediction blocks; and
H265 HEVC comprises dividing an H265 bitstream into coding tree units (CTUs) of different sizes up to 64×64 pixels, where pixel block sizes typically increase coding efficiency, to achieve approximately 25-50% better data compression at a same video quality compared to H264 AVC and supporting resolutions up to 8192×4320 pixels, including 8K ultra high-definition (UHD).

9. The automotive radar system of claim 1, wherein the absence of the radar processor and the implementation of the radar processor functionality into the radar MMIC along with industry-standard H264/H265 encoding provides for reduced costs of the automotive radar system.

10. An automotive radar method, comprising:
providing a radar monolithic microwave integrated circuit (MMIC) configured to perform radar processor functionality including:
obtaining a plurality of received radar signal streams;
performing range fast Fourier transforms (FFTs) on the plurality of received radar signal streams to obtain a plurality of transformed radar signal streams;
performing H264/H265 encoding on I-frames of the plurality of transformed radar signal streams to obtain a plurality of compressed radar signal streams; and
outputting, via a network interface, the plurality of compressed radar signal streams; and
providing a domain controller connected to the radar MMIC via the network interface and configured to receive and utilize the plurality of compressed radar signal streams for an advanced driver-assistance system (ADAS) or autonomous vehicle driving feature,
wherein the automotive radar method does not utilize a distinct or standalone radar processor.

11. The automotive radar method of claim 10, wherein the radar MMIC is configured to transmit a plurality of transmitted radar signal streams and capture the plurality of received radar signal streams via a set of transmitter/receiver devices.

12. The automotive radar method of claim 11, wherein the radar processor functionality further comprises temporarily storing each of the plurality of received radar signal streams, the plurality of transformed radar signal streams, and the plurality of compressed radar signal streams in a static random-access memory (SRAM).

13. The automotive radar method of claim 12, wherein the radar processor functionality further comprises:
conditioning the plurality of received radar signal streams to obtain a plurality of conditioned radar signal streams;
performing the range FFTs on the plurality of conditioned radar signal streams to obtain the plurality of transformed radar signal streams; and
temporarily storing the plurality of conditioned radar signal streams in the SRAM.

14. The automotive radar method of claim 12, wherein the network interface is a lower-rate conventional Ethernet or conventional controller area network (CAN).

15. The automotive radar method of claim 14, wherein the network interface is not a higher-rate CAN flexible data rate (FD) network.

16. The automotive radar method of claim 10, wherein the H264/265 encoding includes H264 Advanced Video Coding (AVC), H265 High-Efficiency Video Coding (HEVC), or a combination thereof.

17. The automotive radar method of claim 16, wherein:
H264 AVC comprises initializing multiple processes in order to create an H264 bitstream and the utilizing a block-oriented standard with motion competition to process frames of video content and generate macroblocks of block sizes as large as 16×16 pixels that are further divided into transform and prediction blocks; and
H265 HEVC comprises dividing an H265 bitstream into coding tree units (CTUs) of different sizes up to 64×64 pixels, where pixel block sizes typically increase coding efficiency, to achieve approximately 25-50% better data compression at a same video quality compared to H264 AVC and supporting resolutions up to 8192×4320 pixels, including 8K ultra high-definition (UHD).

18. The automotive radar method of claim 10, wherein the absence of the radar processor and the implementation of the radar processor functionality into the radar MMIC along with industry-standard H264/H265 encoding provides for reduced costs of the automotive radar system.

19. An automotive radar system, comprising:
a radar monolithic microwave integrated circuit (MMIC) means for:
transmitting a plurality of transmitted radar signal streams and capturing the plurality of received radar signal streams via a set of transmitter/receiver devices means; and
providing radar processor functionality including:
obtaining a plurality of received radar signal streams;
performing range fast Fourier transforms (FFTs) on the plurality of received radar signal streams to obtain a plurality of transformed radar signal streams;
performing H264/H265 encoding on I-frames of the plurality of transformed radar signal streams to obtain a plurality of compressed radar signal streams; and
outputting, via a network interface means, the plurality of compressed radar signal streams; and
a domain controller means connected to the radar MMIC means via the network interface means and for receiving and utilizing the plurality of compressed radar signal streams for an advanced driver-assistance system (ADAS) or autonomous vehicle driving feature means,
wherein the automotive radar system does not include a distinct or standalone radar processor means.

20. The automotive radar system of claim 19, wherein:
the radar processor functionality further comprises conditioning the plurality of received radar signal streams to obtain a plurality of conditioned radar signal streams, performing the range FFTs on the plurality of conditioned radar signal streams to obtain the plurality of transformed radar signal streams, and temporarily storing each of the plurality of received radar signal streams, the plurality of conditioned radar signal streams, the plurality of transformed radar signal streams, and the plurality of compressed radar signal streams in a static random-access memory (SRAM); and
the network interface is a lower-rate conventional Ethernet or conventional controller area network (CAN) and not a higher-rate CAN flexible data rate (FD) network.
